# EUROPÄISCHE PATENTSCHRIFT

(11) **EP 0 393 430 B1**
(45) Veröffentlichungstag und Bekanntmachung des Hinweises auf die Patenterteilung: **13.01.1993**
(21) Anmeldenummer: 90106528.4
(22) Anmeldetag: 05.04.1990
(51) Int. Cl.: C01G 23/053, C22B 34/12

(54) **Verfahren zur Herstellung von Titandioxid**
Process for the preparation of titanium dioxide
Procédé de préparation du bioxyde de titane

(30) Priorität: 17.04.1989 DE 3912554
(43) Veröffentlichungstag der Anmeldung: 24.10.1990
(73) Patentinhaber: BAYER AG, 51368 Leverkusen (DE)
(72) Erfinder: Lailach, Günter, Dr., D-4150 Krefeld (DE); Wiederhöft, Gerhard, D-4150 Krefeld (DE); Deissmann, Walter, Dr., D-4150 Krefeld (DE); Bayer, Eckhard, Dr., c/o Mobay Corporation, Pittsburgh, Pa 15205 (US); Beumer, Peter, Dr., D-4150 Krefeld (DE); Gutsche, Walter, Dr., D-4150 Krefeld (DE)

(56) Entgegenhaltungen:
- EP-A- 0 133 505
- EP-A- 0 320 682

## Beschreibung

Die Erfindung betrifft ein Verfahren zur Herstellung von Titandioxid nach dem Sulfatverfahren, bei dem die beim Waschen des Hydrolysats anfallende Flüssigkeit fraktioniert wird und die verdünnten Fraktionen in den Prozeß zurückgeführt werden, während die relativ konzentrierte Dünnsäure einem Entsorgungsprozeß zugeleitet wird.

Es ist bekannt, daß die Wirtschaftlichkeit der Titandioxidherstellung - außer von den Rohstoff- und Prozeßkosten - in zunehmenden Maße durch die Kosten für die Dünnsäureentsorgung und durch staatlich geforderte Abwasserabgaben beeinflußt wird. Deshalb wurden bereits verschiedene Verfahren vorgeschlagen, durch Erhöhen der Dünnsäurekonzentration oder direkte Rückführung von Dünnsäure in den Prozeß die Entsorgungskosten zu verringern. In EP-B 113 505 wird vorgeschlagen, durch sorgfältige Überwachung der Schwefelsäurekonzentration in der beim Waschen des Hydrolysats anfallenden Flüssigkeit eine Dünnsäure hoher Konzentration von verdünnter Waschsäure abzutrennen Diese verdünnte Waschsäure kann gegebenenfalls teilweise bei einer ersten Eindampfstufe mittels Abwärme vorteilhaft konzentriert werden.

In DE-C 2 729 755 wird vorgeschlagen, Ilmenit mit einem Gemisch aus 62-75 %iger Schwefelsäure, die durch Eindampfen von Dünnsäure und Abtrennen der Metallsulfate zurückgewonnen wurde, und mindestens 95 %iger reiner Schwefelsäure aufzuschließen und den Aufschlußkuchen mit Wasser und einem Teil der bei der Titanylsulfathydrolyse gebildeten Dünnsäure zu lösen. Dieses Verfahren ist jedoch speziell auf den Einsatz von Ilmenit als Rohstoff ausgerichtet, wobei außerdem enge Grenzen durch die mit der Dünnsäure zurückgeführten Metallsulfate, insbesondere Chromsulfat, zu beachten sind.

Ein weiterer wesentlicher Nachteil dieses Verfahrens liegt darin, daß durch den mit 20-30 % sehr hohen Anteil der zum Lösen des Aufschlußkuchens verwendeten Dünnsäure der Prozeß der TiO₂-Herstellung gravierend beeinträchtigt wird. Wird die für den Rohstoffaufschluß eingesetzte Schwefelsäuremenge entsprechend verringert, so resultiert bei der technischen Durchführung der autothermen diskontinuierlichen Aufschlußreaktion eine geringere TiOSO₄-Ausbeute. Wird andererseits das H₂SO₄:TiO₂-Verhältnis beim Aufschluß konstant gehalten, so ergibt sich durch die zum Lösen des Aufschlußkuchens verwendete Dünnsäure in der Titanylsulfatlösung ein so hohes H₂SO₄ : TiO₂-Verhältnis, daß dadurch die Hydrolyseausbeute und die TiO₂-Pigmenteigenschaften negativ beeinflußt werden.

Aufgabe der vorliegenden Erfindung war es daher, ein Verfahren zur Verfügung zu stellen, das es sowohl bei der Verarbeitung von Ilmenit als auch von Titanschlacke erlaubt, ohne den Gesamtprozeß und die Titandioxidpigmentqualität zu beeinträchtigen, einen maximalen Anteil der beim Titanrohstoffaufschluß eingesetzten Schwefelsäure als Dünnsäure hoher Konzentration aus dem Prozeß abzutrennen und dadurch die Kosten für deren Entsorgung möglichst gering zu halten und die Abwasserbelastung zu minimieren.

Gegenstand der Erfindung ist ein Verfahren zur Herstellung von Titandioxid durch Aufschluß von Titanrohstoffen mit Schwefelsäure, Lösen der Aufschlußmasse unter Bildung einer Titanylsulfatlösung, Hydrolyse des Titanylsulfats, Abtrennen des Hydrolysats von der metallsulfathaltigen Schwefelsäure, der sogenannten Dünnsäure, Waschen des Hydrolysats und Kalzinieren zum TiO₂-Pigment, wobei die bei der Abtrennung der Feststoffe aus der bei der Titanylsulfathydrolyse gebildeten Suspension anfallende Lösung vollständig als Dünnsäure einem Entsorgungs- oder Recycling-Prozeß zugeführt wird und die beim Waschen des Hydrolysats anfallende Flüssigkeit in 3 oder 4 Fraktionen mit abnehmender Konzentration aufgeteilt wird, wobei die zuerst anfallende Fraktion A mit der Dünnsäure vereinigt und dem Entsorgungs- oder Recycling-Prozeß zugeführt wird, die danach anfallende zweite Fraktion B bei der Titanylsulfathydrolyse anstelle von Wasser eingesetzt wird, die dritte Fraktion C zum Lösen der beim Titanrohstoffaufschluß gebildeten Aufschlußmasse verwendet wird und gegebenenfalls eine vierte Fraktion D statt Wasser zum Waschen des Hydrolysats verwendet oder als Abwasser abgeleitet wird.

In einer besonderen Ausführungsform des Verfahrens werden 80-93 % der nach der Titanylsulfathydrolyse in der Suspension enthaltenen Schwefelsäure als Dünnsäure dem Entsorgungs- oder Recycling-Prozeß zugeführt, 4-12 % der Schwefelsäure zur Titanylsulfathydrolyse zurückgeführt, 1-5 % der Schwefelsäure zum Lösen der Aufschlußmasse eingesetzt und gegebenenfalls 0,1-5 % der Schwefelsäure zur Hydrolysatwäsche verwendet oder als Abwasser abgeleitet.

Besonders bevorzugt ist das Verfahren, bei dem die dem Entsorgungs- oder Recycling-Prozeß zugeführte Dünnsäure eine Konzentration von mindestens 23 Gew.-% H₂SO₄, vorzugsweise mindestens 24 Gew.-% H₂SO₄ hat.

Vorzugsweise enthält die zur Titanylsulfathydrolyse zurückgeführte Fraktion B aus der Hydrolysatwaschung 7-23 Gew.-% H₂SO₄ und die zum Lösen der Aufschlußmasse verwendete Fraktion C 0,2-7 Gew.-% H₂SO₄.

In einer bevorzugten Ausführungsform des Verfahrens wird die Titanylsulfathydrolyse unter Verwendung von separat hergestellten Hydrolysekeimen durchgeführt und die Fraktion B erst zugefügt, wenn mindestens 50 % der Gesamtdauer des Hydrolyseprozesses abgelaufen sind.

Die beim Waschen des Hydrolysats anfallende Flüssigkeit wird also je nach Schwefelsäurekonzentration in drei oder gegebenenfalls vier verschiedene Fraktionen aufgeteilt. Diese Fraktionen werden dann gezielt in den Prozeß zurückgeführt oder abgeleitet.

Im Einzelnen umfaßt der Prozeß folgende Stufen:
Titanrohstoffe, insbesondere Ilmenit oder Titanschlacke, werden mit 80-95 %iger Schwefelsäure auf bekannte Weise aufgeschlossen. Dabei wird als Schwefelsäure vorzugsweise ein Gemisch aus mindestens 95 %iger Schwefelsäure oder Oleum und mindestens 60 %iger Schwefelsäure, die durch Eindampfen und Abtrennen der Metallsulfate aus der Dünnsäure zurückgewonnen wurde, verwendet. Alternativ kann auch durch andere Recycling-Prozesse aus Dünnsäure zurückgewonnene Schwefelsäure eingesetzt werden.

Die beim Rohstoffaufschluß anfallende, vorzugsweise feste Aufschlußmasse wird erfindungsgemäß mit der dritten Fraktion C der bei der Hydrolysatwäsche anfallenden Lösung aufgelöst. Dabei handelt es sich um eine Fraktion mit einem H₂SO₄-Gehalt von 0,2-7 Gew.-%. Zusammen mit der Fraktion C können Wasser oder andere schwefelsäurehaltige Lösungen verwendet werden.

Infolge der geringen Konzentration der Fraktion C wird eine Beeinträchtigung des nachfolgenden Hydrolyseprozesses oder der Pigmentqualität vermieden.

Aus der erhaltenen Titanylsulfatlösung werden auf bekannte Weise Feststoffe und gegebenenfalls Eisensulfat-Heptahydrat abgetrennt.

Die anschließende Titanylsulfathydrolyse erfolgt z.B. unter Verwendung von separat hergestellten Hydrolysekeimen, wobei die Fraktion B der bei der Hydrolysatwäsche anfallenden Lösung zugefügt wird. Bevorzugt wird die Fraktion B nach Ablauf von mindestens 50 % der Gesamtdauer des Hydrolyseprozesses zugefügt. Die Menge der Fraktion B ist so bemessen, daß die Suspension am Ende des Hydrolyseprozesses 160-200 g TiO₂/l enthält. Durch die Zugabe der erfindungsgemäß 7-23 Gew.-% H₂SO₄ enthaltenden Fraktion B erfolgt keine Beeinträchtigung der Pigmentqualität. Die Konzentration der Dünnsäure wird aber deutlich erhöht gegenüber derjenigen Konzentration, die bei Zugabe von Wasser entsprechend dem Stand der Technik erhalten wird.

Das Hydrolysat wird, gegebenenfalls durch Filtration, von der Mutterlauge, der H₂SO₄ und Metallsulfate enthaltenden Dünnsäure, abgetrennt und anschließend mit Wasser gewaschen. Die Konzentration der bei dieser Wäsche des Hydrolysats anfallenden ebenfalls H₂SO₄ und Metallsulfate enthaltenden Lösung ändert sich während des Waschvorgangs auf charakteristische Weise. Anfangs wird Dünnsäure durch das Waschwasser aus dem Hydrolysat verdrängt. Danach fällt die Schwefelsäurekonzentration langsam aus dem Bereich von 24-27 Gew.-% auf Werte von 18-23 Gew.-%. Erfindungsgemäß wird diese konzentrierte Lösung als erste Fraktion A zur Dünnsäure geleitet, bis die H₂SO₄-Konzentration der abfließenden Lösung auf einen Wert im Bereich von 24-15 Gew.-% abgefallen ist. Die so erhaltene Dünnsäure enthält 85-97 % der beim Rohstoffaufschluß eingesetzten Sulfationen (abzüglich der gegebenenfalls als Eisensulfat-Heptahydrat abgetrennten Sulfationen), entsprechend 80-93 % der nach der Titanylsulfathydrolyse in der Suspension enthaltenden Schwefelsäure. Anschließend wird eine Fraktion B abgetrennt, während die H₂SO₄-Konzentration rasch von 24-15 auf 12-3 Gew.-% fällt. Diese Fraktion B, mit einem durchschnittlichen H₂SO₄-Gehalt von 10-23 Gew.-% enthält erfindungsgemäß 4-12 % der nach der Hydrolyse vorliegenden Schwefelsäure und wird, wie oben beschrieben, bei der Titanylsulfathydrolyse zugesetzt. Als dritte Fraktion C wird die relativ stark verdünnte Lösung separiert, die nach dem steilen Konzentrationsabfall auf weniger als 12 Gew.-% H₂SO₄ anfällt. Diese Fraktion C, mit durchschnittlich 0,2-7 Gew.-% H₂SO₄, enthält erfindungsgemäß 1-5 % der nach der Hydrolyse vorliegenden Schwefelsäure und wird zum Lösen der Aufschlußmasse verwendet. Gegebenenfalls wird eine stark verdünnte vierte Fraktion D statt Wasser zum Waschen des Hydrolysats eingesetzt oder als Abwasser abgeleitet. Diese enthält erfindungsgemäß weniger als 5 %, vorzugsweise weniger als 1 % der nach der Hydrolyse vorliegenden Schwefelsäure.

Während nach der DE-C-2 729 755 nur eine Dünnsäurekonzentration von 21-23 Gew.-% H₂SO₄ erreicht werden kann und Probleme durch die in den zurückgeführten Lösungen enthaltenen farbtonrelevanten Metallionen, insbesondere Cr- oder V-Ionen zu erwarten waren, wurde überraschend gefunden, daß durch die Anwendung des erfindungsgemäßen Verfahrens weder eine Beeinträchtigung des Prozesses der Titandioxidherstellung noch der Pigmentqualität erfolgt. Ein wesentlicher Vorteil der Erfindung ist, daß bei deren Anwendung sowohl bei der Verarbeitung von Ilmenit wie auch von Titanschlacke als Rohstoff eine Dünnsäure mit hoher Konzentration unter gleichzeitger Minimierung der Abwasserbelastung erhalten wird. Die erzielte Dünnsäurekonzentraion von mindestens 23 Gew.-% H₂SO₄, vorzugsweise 24-27 Gew.-% H₂SO₄, erlaubt es, die Kosten der Entsorgung durch Recycling gegenüber dem Stand der Technik deutlich zu senken.

Die Vorteile des erfindungsgemäßen Verfahrens sollen durch die folgenden Beispiele verdeutlicht werden.

### Beispiel 1

1.170 kg Titanschlacke mit 75 Gew.-% TiO₂-Gehalt und 405 kg Ilmenit mit 54 Gew.-% TiO₂-Gehalt wurden mit 1.996 kg 77,2 %iger Schwefelsäure und 970 kg 27 %igen Oleum aufgeschlossen. (Die 77,2 %ige Schwefelsäure war gemäß EP-B-133 505 aus Dünnsäure zurückgewonnen worden. Sie enthielt 5,8 Gew.-% Metallsulfate, davon 345 ppm Cr als Chromsulfat und 36 ppm V als Vanadiumsulfat). Die bei der Aufschlußreaktion gebildete feste Reaktionsmasse wurde mit 3,4 m³ der bei der Hydrolysatwäsche einer vorhergehenden Charge abgetrennten Fraktion C und 0,9 m³ Waschlösung aus der Wäsche der Aufschlußrückstände gelöst. Die Lösung wurde filtriert und das Titanylsulfat hydrolysiert.

Die Hydrolyse wurde auf folgende Weise durchgeführt:
4,35 m³ Titanylsulfatlösung (entsprechend 1 t TiO₂) wurden mit 49 l einer Suspension separat durch Fällung von Titanylsulfat mit Natronlauge hergestellter Hydrolysekeime versetzt. Die Mischung wurde durch Einleiten von Dampf zum Sieden gebracht und bis zum Erreichen des "match point" gekocht. Danach wurde die Dampfeinleitung 30 min lang unterbrochen, erneut Dampf eingeleitet und 2,5 h lang gekocht. Nach 2,5 h Gesamtprozeßdauer wurden 0,9 m³ Lösung zugefügt, die bei der Hydrolysatwäsche als Fraktion B abgetrennt worden waren. 70 min nach Zugabe der Lösung wurde die Dampfeinleitung beendet. Die Hydrolyseausbeute lag bei 95,4 %.

Die erhaltende Suspension wurde filtriert, wobei als Filtrat Dünnsäure mit 26,9 Gew.-% H₂SO₄ anfiel. Danach wurde der Filterkuchen mit Wasser gewaschen. Die bei dieser Filterkuchenwäsche als Filtrat anfallende Lösung wurde in 4 Fraktionen aufgeteilt:
Zu Beginn der Wäsche fiel die Konzentration der Lösung langsam von 26,4 auf 22-23 Gew.-% H₂SO₄, um dann schnell auf Werte unter 5 Gew.-% abzufallen. Als Fraktion A wurden die ersten 2,9 m³ Filtrat bis zum Erreichen einer Konzentration von 23 Gew.-% H₂SO₄ abgetrennt. Diese Fraktion hatte eine durchschnittliche Konzentration von 24,6 Gew.-% H₂SO₄ und wurde mit der Dünnsäure vereinigt, die bei der Filtration der Hydrolysatsuspension angefallen war. Die dem Recycling-Prozeß zugeführte Dünnsäure hatte eine durchschnittliche Konzentration von 25,5 Gew.-% H₂SO₄, 345 ppm Cr und 580 ppm V. Sie enthielt 95,2 % der beim Rohstoffaufschluß eingesetzten Sulfationen. Als Fraktion B wurden anschließend 0,9 m³ des Filtrats abgetrennt, während die Konzentration desselben von 23 auf 10,2 Gew.-% H₂SO₄ fiel. Die Fraktion B hatte eine durchschnittliche Konzentration von 19,6 Gew-.-% H₂SO₄, 265 ppm Cr und 446 ppm V. Sie enthielt 9,3 % der Schwefelsäure, die nach der Hydrolyse in der Suspension enthalten war. Danach wurden 2,4 m³ Lösung als Fraktion C abgetrennt. Diese Filtratfraktion hatte eine Konzentration von 5,5 Gew.-% H₂SO₄, 19 ppm Cr und 32 ppm V. Sie enthielt 5,4 % der am Ende der Hydrolyse vorhandenen Schwefelsäure.

Beim Umstellen des Filtratstromes als Fraktion D zum Abwasserkanal enthielt das Filtrat 3,1 Gew.-% H₂SO₄. Die Konzentration fiel bis auf 0,3 Gew.-% H₂SO₄. Es wurden 1,8 % der beim Rohstoffaufschluß eingesetzten Sulfationen abgeleitet.

Der nach der Hydrolysatwäsche erhaltene Filterkuchen wurde durch Zugabe von Al-Pulver und Schwefelsäure gebleicht. Anschließend wurde er mit den Einstellchemikalien Phosphorsäure, Alkalien und Rutilkeimen versetzt und bei 950°C unter Standardbedingungen in einem Drehrohrofen zu Rutilpigment kalziniert.

Das so erhaltene Pigment war mit dem üblichen Standard der laufenden Produktion, bei der statt der Fraktion B Wasser bei der Hydrolyse zugesetzt wurde und die Aufschlußmasse mit Wasser gelöst wurde, nahezu identisch.

### Beispiel 2

Beim Rohstoffaufschluß wurde die gleiche Erzmischung wie in Beispiel 1 mit 2.055 kg 77,2 %iger zurückgewonnener Schwefelsäure und 1.000 kg Oleum aufgeschlossen. Der Aufschlußkuchen wurde mit 3,3 m³ des als Fraktion C abgetrennten Filtrats gelöst. Die Aufschlußbeute lag um 0,3 % höher als bei Beispiel 1.

Die Hydrolyse erfolgte analog Beispiel 1 unter Zugabe von 0,9 m³ Waschfiltrat (Fraktion B). Die Hydrolyseausbeute lag bei 95,7 %. Die erhaltene Suspension wurde filtriert; die dabei anfallende Dünnsäure hatte eine Konzentration von 26,3 Gew.-% H₂SO₄. Danach wurde der Filterkuchen mit Wasser gewaschen und das Waschfiltrat in 3 Fraktionen getrennt: Bis zu einer Konzentration von 20,5 Gew.-% H₂SO₄ wurde die Fraktion A abgetrennt. Sie hatte einen durchschnittlichen Schwefelsäuregehalt von 23,3 Gew.-% und wurde mit der vorher angefallenen Dünnsäure vereinigt. Die dem Recycling-Prozeß zugeführte Dünnsäure enthielt 24,7 Gew.-% H₂SO₄, 334 ppm Cr und 562 ppm V. Sie enthielt 97 % der beim Rohstoffaufschluß eingesetzten Sulfationen; die restlichen 3 % waren chemisch an das Titanoxidhydrolysat gebunden.

Nach der Fraktion A wurden 0,9 m³ Filtrat als Fraktion B abgetrennt, während die H₂SO₄-Konzentration von 20,5 auf 6 Gew.-% fiel. Die Fraktion B enthielt durchschnittlich 17,8 Gew.-% H₂SO₄, entsprechend 9 % der gesamten nach der Hydrolyse vorhandenen Schwefelsäure.

Als Fraktion C wurden 3,3 m³ Filtrat mit einer H₂SO₄-Konzentration zwischen 6 und 0,4 Gew.-%, durchschnittlich 1,7 Gew.-% abgetrennt. Sie enthielt 2,5 % der am Ende der Hydrolyse vorhandenen Schwefelsäure.

Das Hydrolysat wurde analog Beispiel 1 zu Rutilpigment verarbeitet. Das Pigment entsprach ungefähr dem Produktionsstandard.

## Patentansprüche

1. Verfahren zur Herstellung von Titandioxid durch Aufschluß von Titanrohstoffen mit Schwefelsäure, Lösen der Aufschlußmasse unter Bildung einer Titanylsulfatlösung, Hydrolyse des Titanylsulfats, Abtrennen des Hydrolysats von der metallsulfathaltigen Schwefelsäure, der sogenannten Dünnsäure, Waschen des Hydrolysats und Kalzinieren zum TiO₂-Pigment, dadurch gekennzeichnet, daß die bei der Abtrennung der Feststoffe aus der bei der Titanylsulfathydrolyse gebildeten Suspension anfallende Lösung vollständig als Dünnsäure einem Entsorgungs- oder Recycling-Prozeß zugeführt wird und die beim Waschen des Hydrolysats anfallende Flüssigkeit in 3 oder 4 Fraktionen mit abnehmender Konzentration aufgeteilt wird, wobei die zuerst anfallende Fraktion A mit der Dünnsäure vereinigt und dem Entsorgungs- oder Recycling-Prozeß zugeführt wird, die danach anfallende zweite Fraktion B bei der Titanylsulfathydrolsyse anstelle von Wasser eingesetzt wird, die dritte Fraktion C zum Lösen der beim Titanrohstoffaufschluß gebildeten Aufschlußmasse verwendet wird und gegebenenfalls eine vierte Fraktion D statt Wasser zum Waschen des Hydrolysats verwendet oder als Abwasser abgeleitet wird.

2. Verfahren nach Anspruch 1, dadurch gekennzeichnet, daß 80-93 % der nach der Titanylsulfathydrolyse in der Suspension enthaltenen Schwefelsäure als Dünnsäure dem Entsorgungs- oder Recycling-Prozeß zugeführt werden, 4-12 % der Schwefelsäure zur Titanylsulfathydrolyse zurückgeführt werden, 1-5 % der Schwefelsäure zum Lösen der Aufschlußmasse eingesetzt werden und gegebenenfalls 0,1-5 % der Schwefelsäure zur Hydrolysatwäsche verwendet oder als Abwasser abgeleitet werden.

3. Verfahren nach Anspruch 1 und 2, dadurch gekennzeichnet, daß die dem Entsorgungs- oder Recycling-Prozeß zugeführte Dünnsäure eine Konzentration von mindestens 23 Gew.-% H₂SO₄, vorzugsweise mindestens 24 Gew.-% H₂SO₄ hat.

4. Verfahren nach Anspruch 1 und 2, dadurch gekennzeichnet, daß die zur Titanylsulfathydrolyse zurückgeführte Fraktion B aus der Hydrolysatwaschung 7-23 Gew.-% H₂SO₄ enthält.

5. Verfahren nach Anspruch 1 und 2, dadurch gekennzeichnet, daß die zum Lösen der Aufschlußmasse verwendete Fraktion C 0,2-7 Gew.-% H₂SO₄ enthält.

6. Verfahren nach Anspruch 1, 2 und 4, dadurch gekennzeichnet, daß die Titanylsulfathydrolyse unter Verwendung von separat hergestellten Hydrolysekeimen durchgeführt wird und die Fraktion B erst zugefügt, wenn mindestens 50 % der Gesamtdauer des Hydrolyseprozesses abgelaufen sind.

## Claims

1. A process for the preparation of titanium dioxide by the decomposition of titanium raw materials with sulphuric acid, solution of the resulting mass with formation of a titanyl sulphate solution, hydrolysis of the titanyl sulphate, separation of the hydrolysate from the metal sulphate-containing sulphuric acid, the so-called thin acid, washing of the hydrolysate and calcining to form TiO₂ pigment, characterised in that the solution obtained after separation of the solids from the suspension obtained in the hydrolysis of titanyl sulphate is completely transferred as thin acid to a disposal or recycling process and the liquid obtained from washing of the hydrolysate is subdivided into three or four fractions with decreasing concentrations, the first fraction A obtained being combined with the thin acid and transferred to the disposal or recycling process, the second fraction B subsequently obtained being used instead of water for the titanyl sulphate hydrolysis, the third fraction C being used for dissolving the decomposition mass obtained from the decomposition of titanium raw material and a fourth fraction D being optionally used instead of water for washing the hydrolysate or discharged as effluent.

2. A process according to Claim 1, characterised in that from 80-93% of the sulphuric acid present in the suspension after titanyl sulphate hydrolysis is transferred as thin acid to the disposal or recycling process, from 4-12% of the sulphuric acid is returned to the titanyl sulphate hydrolysis, from 1-5% of the sulphuric acid is used for dissolving the decomposition mass and optionally from 0.1-5% of the sulphuric acid are used for washing the hydrolysate or discharged as effluent.

3. A process according to Claims 1 and 2, characterised in that the thin acid transferred to the disposal or recycling process has a concentration of at least 23% by weight of H₂SO₄, preferably at least 24% by weight H₂SO₄.

4. A process according to Claims 1 and 2, characterised in that the fraction B obtained from washing of the hydrolysate and returned to the hydrolysis of titanyl sulphate contains from 7 to 23% by weight of H₂SO₄.

5. A process according to Claims 1 and 2, characterised in that fraction C used for dissolving the decomposition mass contains from 0.2 to 7% by weight of H₂SO₄.

6. A process according to Claims 1, 2 and 4, characterised in that the hydrolysis of titanyl sulphate is carried out using separately prepared hydrolysis nuclei and fraction B is not added until at least 50% of the total duration of the hydrolysis process has expired.

## Revendications

1. Procédé pour la fabrication du bioxyde de titane par attaque de matières premières titanifères par l'acide sulfurique, dissolution de la masse d'attaque avec formation d'une solution de sulfate de titanyle, hydrolyse du sulfate de titanyle, séparation de l'hydrolysat et de l'acide sulfurique contenant des sulfates métalliques, qu'on appelle acide "dilué", lavage de l'hydrolysat et calcination en TiO₂ pigmentaire, caractérisé en ce que la solution obtenue à la séparation des matières solides de la suspension formée à l'hydrolyse du sulfate de titanyle est envoyée en totalité, en tant qu'acide dilué, à une opération de rejet ou de recyclage et le liquide obtenu au lavage de l'hydrolysat est divisé en trois ou quatre fractions à concentrations décroissantes, la fraction A obtenue en premier étant combinée avec l'acide dilué et envoyée à l'opération de rejet ou de recyclage, la deuxième fraction B obtenue à la suite est utilisée à la place de l'eau à l'hydrolyse du sulfate de titanyle, la troisième fraction C est utilisée pour dissoudre la masse d'attaque formée à l'attaque de la matière première titanifère et, le cas échéant, une quatrième fraction D est utilisée à la place de l'eau pour le lavage de l'hydrolysat ou évacuée en tant qu'eaux résiduaires.

2. Procédé selon la revendication 1, caractérisé en ce que 80 à 93 % de l'acide sulfurique contenu dans la suspension après hydrolyse du sulfate de titanyle sont envoyés en tant qu'acides dilués à l'opération de rejet ou de recyclage, 4 à 12 % de l'acide sulfurique sont recyclés à l'hydrolyse du sulfate de titanyle, 1 à 5 % de l'acide sulfurique sont utilisés pour dissoudre la masse d'attaque et, le cas échéant, 0,1 à 5 % de l'acide sulfurique sont utilisés pour le lavage de l'hydrolysat ou évacués en tant qu'eaux usées.

3. Procédé selon les revendications 1 et 2, caractérisé en ce que l'acide dilué envoyé à l'opération de rejet ou de recyclage est à une concentration d'au moins 23 % en poids d'H₂SO₄, de préférence d'au moins 24 % en poids d'H₂SO₄.

4. Procédé selon les revendications 1 et 2, caractérisé en ce que la fraction B provenant du lavage de l'hydrolysat, recyclée à l'hydrolyse du sulfate de titanyle, contient de 7 à 23 % en poids d'H₂SO₄.

5. Procédé selon les revendications 1 et 2, caractérisé en ce que la fraction C utilisée pour dissoudre la masse d'attaque contient 0,2 à 7 % en poids d'H₂SO₄.

6. Procédé selon les revendications 1, 2 et 4, caractérisé en ce que l'hydrolyse du sulfate de titanyle est réalisée avec l'utilisation de germes d'hydrolyse préparés séparément et la fraction B n'est ajoutée qu'après écoulement d'au moins 50 % de la durée totale de l'opération d'hydrolyse.
